# EUROPÄISCHE PATENTSCHRIFT

(11) **EP 2 845 199 B1**
(45) Veröffentlichungstag und Bekanntmachung des Hinweises auf die Patenterteilung: **30.03.2016**
(21) Anmeldenummer: 13717737.4
(22) Anmeldetag: 08.04.2013
(51) Int. Cl.: G21C 13/10, G21C 17/02, G21C 19/07, G21C 19/32, G21C 19/40, G21C 19/18, G21C 19/08

(54) **BRENNELEMENTLAGERBECKEN EINES KERNKRAFTWERKS**
FUEL POOL OF A NUCLEAR POWER PLANT
PISCINE DE STOCKAGE D'ÉLÉMENTS DE COMBUSTIBLE DANS UNE CENTRALE NUCLÉAIRE

(30) Priorität: 04.05.2012 DE 102012207473
(43) Veröffentlichungstag der Anmeldung: 11.03.2015
(73) Patentinhaber: AREVA GmbH, 91052 Erlangen (DE)
(72) Erfinder: WORSCH, Marcus, 91083 Baiersdorf (DE); MÜLLER, Erhard, 91362 Pretzfeldt (DE); NEMECEK, Michael, 91077 Kleinsendelbach (DE); JAKOBS, Norbert, 91091 Großenseebach (DE)
(74) Vertreter: Schlögl, Markus
(86) Internationale Anmeldenummer: PCT/EP2013/057289
(87) Internationale Veröffentlichungsnummer: WO 2013/164158

(56) Entgegenhaltungen:
- DE-A1- 2 844 621
- JP-A- H09 138 294
- JP-A- 2002 318 296
- US-A- 3 744 593
- US-A- 4 635 477

## Beschreibung

Die Erfindung bezieht sich auf ein Brennelementlagerbecken eines Kernkraftwerks, das über eine verschließbare Schleuse mit einer neben dem Brennelementlagerbecken angeordneten Reaktorgrube verbunden ist.

In einem Kernkraftwerk befindet sich in der Regel neben der Reaktorgrube ein geflutetes Brennelementlagerbecken, in dem abgebrannte Brennelemente in einem Brennelementlagergestell gelagert und durch Umwälzen des im Brennelementlagerbecken befindlichen Beckenwassers gekühlt werden bis ihre Aktivität soweit abgeklungen ist, dass sie außerhalb des Brennelementlagerbeckens transportiert werden können. Zwischen Reaktorgrube und Brennelementlagerbecken befindet sich eine mit einem Schütz verschließbare Schleuse, die während Revisionsarbeiten, bei denen die Reaktorgrube geflutet ist, geöffnet werden kann, um aus dem Kern mit Hilfe der Brennelementlademaschine entnommene abgebrannte Brennelemente unter Wasser von der Reaktorgrube in das Brennelementlagerbecken überführen und im Brennelementlagergestell abstellen zu können.

Ein Brennelementlagerbecken mit einer derartigen einen Schutz aufweisenden Schleuse zu einer Reaktorgrube ist beispielsweise aus JP 2002/318296A bekannt.

Im Falle einer in der Reaktorgrube auftretenden Leckage, beispielsweise ein Rohrleitungsbruch einer die Reaktorgrube mit Wasser speisenden Leitung oder bei einem Siedewasserreaktor eine im Flutkompensator auftretende Leckage, muss die geöffnete Schleuse geschlossen werden, um ein Absinken des Wasserstandes im Brennelementlagerbecken zu vermeiden. Das Öffnen und Schließen des Schützes wird manuell ausgelöst.

Da mit dem Auftreten einer solchen Leckage ein Absinken des Wasserstandes in der Reaktorgrube ein entsprechend höherer Strahlenpegel auf der Beckenflurebene einhergeht wird beim Auftreten einer solchen Leckage unverzüglich Alarm ausgelöst, und die auf der Beckenflurebene zu diesem Zeitpunkt tätigen Mitarbeiter müssen das Gebäude umgehend verlassen. Da das Öffnen und Schließen des Schützes manuell ausgelöst wird, kann es vorkommen, dass das die Schleuse verschließende Schütz offen bleibt. Dies hat zur Folge, dass auch der Wasserstand im Brennelementlagerbecken zumindest bis zur Unterkante der Schleusenöffnung sinkt. Dadurch verringert sich die Wasserüberdeckung der im Brennelementlagergestell gelagerten Brennelemente, wobei im ungünstigsten Fall obere Teile der Brennelemente über den Wasserspiegel hinausragen, so dass der Strahlenpegel so groß wird, dass der Bereich in der Umgebung des Brennelementlagerbeckens nicht mehr begehbar ist und Maßnahmen zur Kühlung der Brennelemente nur sehr schwer oder nicht mehr durchgeführt werden können.

Der Erfindung liegt daher die Aufgabe zu Grunde, ein Brennelementlagerbecken eines Kernkraftwerks mit einer Schleuse zu einer Reaktorgrube anzugeben, bei dem die vorstehend genannten Probleme vermieden sind.

Die genannte Aufgabe wird gemäß der Erfindung gelöst mit einem Brennelementlagerbecken mit den Merkmalen des Patentanspruches 1. Gemäß diesen Merkmalen ist die Schleuse zur Reaktorgrube mit einem Schütz zum automatischen Verschließen der Schleuse bei einem Absinken des Wasserspiegels im Brennelementlagerbecken unter einem vorgegebenen Grenzwert versehen. Durch diese Maßnahme ist eine ausreichende Überdeckung der im Brennelementlagerbecken gelagerten Brennelemente mit Wasser auch dann sichergestellt, wenn der Wasserspiegel in der Reaktorgrube aufgrund eines Störfalls den vorgegebenen Grenzwert unterschreitet.

Wenn außerdem zum Antreiben des Schützes beim automatischen Verschließen ein passives Antriebssystem mit einem netzunabhängigen Energiespeicher vorgesehen ist, ist auch im Falle eines vollständigen Ausfalls des Versorgungsnetzes im Kernkraftwerk ein Verschließen der Schleuse gewährleistet. Ein solcher netzunabhängiger Speicher kann sowohl ein elektrischer als auch ein mechanischer Energiespeicher, beispielsweise ein angehobenes Gewicht oder eine vorgespannte Feder oder ein pneumatischer Energiespeicher sein, der unmittelbar und ohne elektrischen Antrieb mit dem Schütz gekoppelt ist.

Eine besonders hohe Funktionssicherheit kann erzielt werden, wenn der Signalgeber für das Unterschreiten des Grenzwertes und zum Auslösen der Schließbewegung des Schützes einen Schwimmer umfasst.

Zur weiteren Erläuterung der Erfindung wird auf die in den Figuren dargestellten Ausführungsbeispiele verwiesen. Es zeigen:
Fig. 1 ein neben einer Reaktorgrube angeordnetes und mit diesem über eine Schleuse fluidisch verbundenes Brennelementlagerbecken gemäß der Erfindung in einem schematischen Prinzipbild,
Fig. 2 eine vorteilhafte Ausführungsform, bei der als Signalgeber ein Schwimmer vorgesehen ist,
Fig. 3 bis 6 vorteilhafte Ausgestaltungen eines zum automatischen Verschließen der Schleuse geeigneten Schützes.

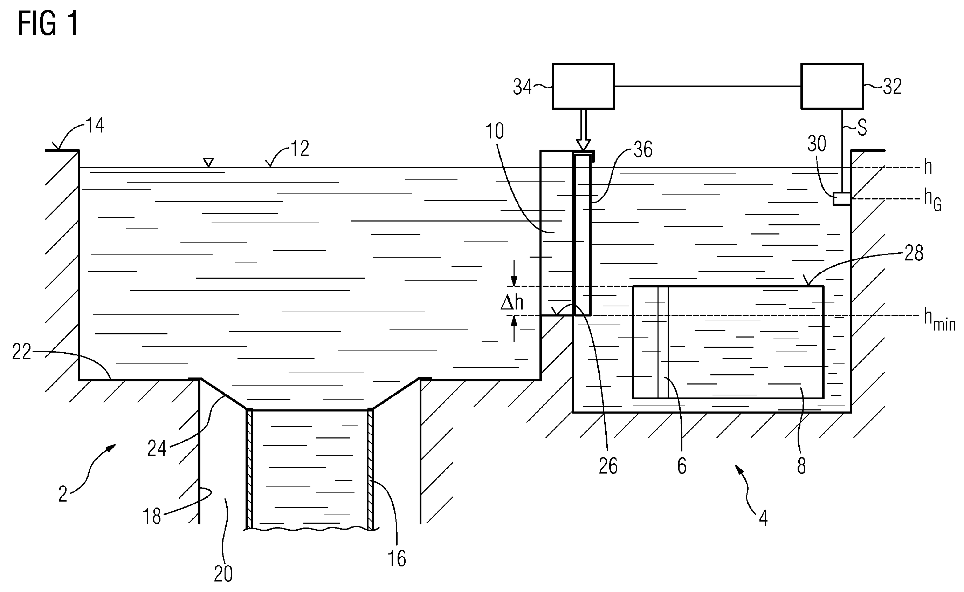

Gemäß Fig. 1 befindet sich neben einer Reaktorgrube 2 eines Kernkraftwerkes ein Brennelementlagerbecken 4, in dem abgebrannte Brennelemente 6, von denen nur eines symbolisch dargestellt ist, in einem ebenfalls nur schematisch veranschaulichten Brennelementlagergestell 8 aufrecht stehend gelagert sind. Reaktorgrube 2 und Brennelementlagerbecken 4 sind über eine verschließbare Schleuse 10 fluidisch miteinander verbunden. In der Fig. 1 ist eine Situation dargestellt, in der die Reaktorgrube 2 mit Wasser geflutet ist, wobei sich der Wasserspiegel 12 in einer Höhe h nur geringfügig unterhalb der Beckenflurebene 14 befindet.

Fig. 1 zeigt einen Zustand des Kernkraftwerks, wie er bei der Durchführung von Revisionsarbeiten, beispielsweise beim Brennelementwechsel vorliegt. Ein in der Reaktorgrube 4 befindlicher Reaktordruckbehälter 16 ist geöffnet und ebenfalls mit Wasser geflutet. Im dargestellten Ausführungsbeispiel ist die Situation in einem Siedewasserreaktor gezeigt, bei dem ein zwischen dem Reaktordruckbehälter 16 und der Wand 18 der Reaktorgrube 2 befindlicher Zwischenraum 20 nicht mit Wasser geflutet ist. Um ein Eindringen des Wassers in diesen Zwischenraum 20 zu verhindern sind vor Beginn der Revisionsarbeiten zwischen dem Reaktordruckbehälter 16 und der neben diesem befindlichen Abstellflächen 22 sogenannte Flutkompensatoren 24 eingebracht worden.

Der Fig. 1 ist nun zu entnehmen, dass sich im dargestellten Ausführungsbeispiel der Boden 26 der Schleuse 10 unterhalb der Oberkante 28 der Brennelemente 6 bzw. des Brennelementlagergestells 8 befindet. Dementsprechend würde sich bei geöffneter Schleuse 10 im Fall eines Leerlaufens der Reaktorgrube 2, beispielsweise bei Bruch eines Flutkompensators 24, auch das Brennelementlagerbecken 4 bis auf das Niveau dieses Bodens 26 entleeren. In diesem Fall würden die im Brennelementlagergestell 8 gelagerten Brennelemente 6 die sich dann einstellende Höhe hₘᵢₙ des Wasserspiegels 12 um Δh überragen.

Um dies zu vermeiden ist im Brennelementlagerbecken 4 ein Signalgeber 30 angeordnet, der ein Signal S erzeugt, wenn die Höhe h des Wasserspiegels 12 unter einen Grenzwert h_{G} absinkt. Mit Hilfe dieses Signals S wird über einen netzunabhängigen Energiespeicher 30, beispielsweise eine Batterie, ein mechanischer, ein pneumatischer oder ein hydraulischer Energiespeicher, ein Antrieb 34 mit Energie versorgt, der ein geöffnetes Schütz 36 antreibt, mit dem die Schleuse 10 verschlossen wird. Mit anderen Worten: Bei Absinken des Wasserspiegels 12 unter einen Grenzwert h_{G} wird die Schleuse 10 automatisch, d.h. ohne dass ein manuelles Auslösen erforderlich ist, und passiv, d.h. unabhängig von einer Versorgung durch ein externes Netz geschlossen, so dass ein weiteres Absinken des Wasserspiegels im Brennelementlagerbecken verhindert und eine ausreichende Wasserüberdeckung und Kühlung der im Lagergestell 8 gelagerten Brennelemente 6 sichergestellt ist.

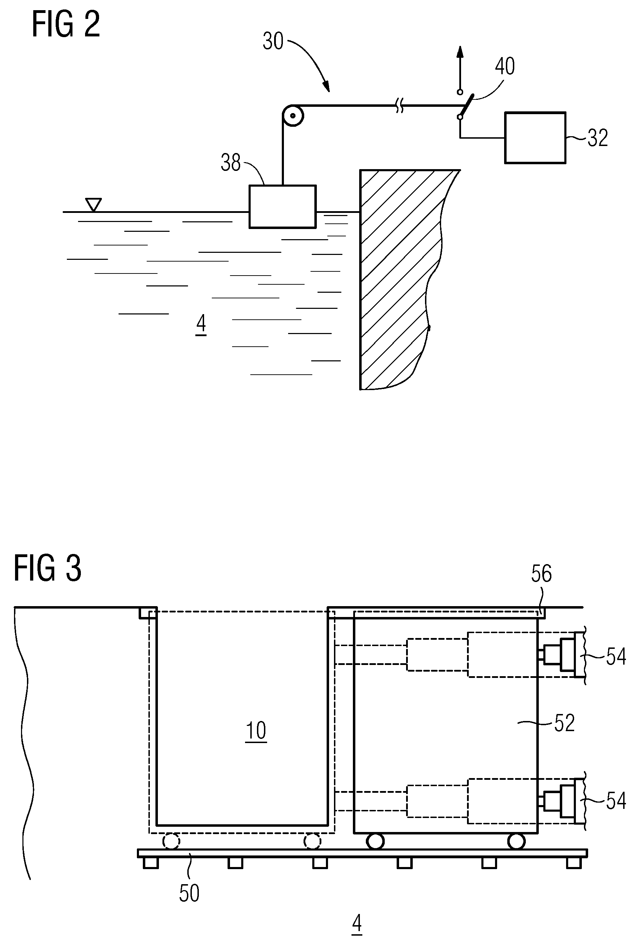

Im Ausführungsbeispiel gemäß Fig. 2 umfasst der Signalgeber 30 einen Schwimmer 38, der einen Schalter 40 betätigt, mit dem der Energiespeicher 32 dem Antrieb 34 zugeschaltet wird.

Im Ausführungsbeispiel der Fig. 3 ist eine Schleuse 10 dargestellt, bei der das Schütz 36 durch eine Platte 52 gebildet ist, die auf einer an der Wand des Brennelementlagerbeckens 2 angeordneten, horizontal verlaufenden Schiene 50 aufgegleist ist. Das Schütz 52 kann mit Hilfe von Hydraulikzylindern 54 zwischen einer Position, in der die Schleuse 10 geöffnet ist und einer gestrichelt eingezeichneten Position, in der die Schleuse 10 geschlossen ist, hin und her gefahren werden. Ein ebenfalls an der Wand des Brennelementlagerbeckens 2 angeordnetes Profil 56 dient als obere Führung des Schützes 52, um ein sicheres Verschließen der Schleuse 10 sicherzustellen.

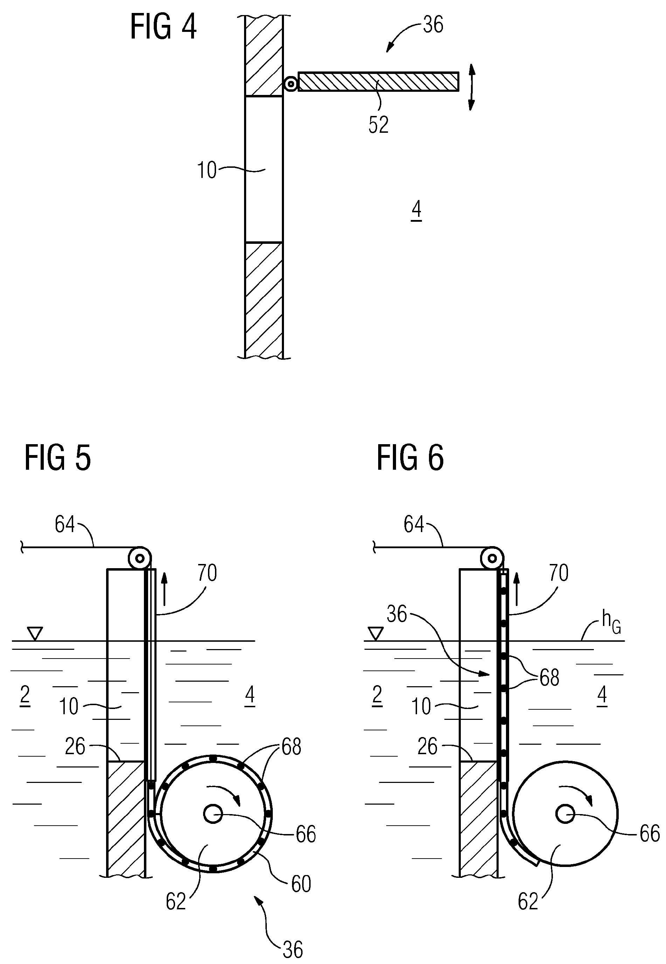

In einer in Fig. 4 dargestellten alternativen Ausführungsform ist als Schütz 36 eine schwenkbar gelagerte Platte 52 (Schwenkschütz) vorgesehen, die die Schleuse 10 mittels eines hydraulischen, pneumatischen oder elektrischen Antriebs durch eine Schwenkbewegung verschließt.

Alternativ zu den in Fig. 3 und 4 dargestellten Ausführungsformen, bei denen das Schütz 36 im Wesentlichen durch eine Platte gebildet ist, ist in Fig. 5 und 6 ein Schütz 36 in Form eines Rollos 60 vorgesehen, das auf einer unterhalb des Bodens 26 der Schleuse 10 gelagerten Rolle 62 aufgewickelt ist und mit einem Zugseil 64 zum Verschließen der Schleuse 10 abgewickelt werden kann. Das Rollo 60 besteht aus einer elastischen gummiartigen Membran, die durch parallel zur Drehachse 66 der Rolle 62 angeordnete Profile 68 versteift ist, die außerdem zur Führung des Rollos 60 in neben der Schleuse 10 angeordneten Führungsschienen 70 dienen.

Ein solches Rollo 60 kann beispielsweise auch ergänzend zu dem in Fig. 3 dargestellten verschiebbaren Schütz vorgesehen sein.

## Patentansprüche

1. Brennelementlagerbecken (4) eines Kernkraftwerks mit einer Schleuse (10) zu einer Reaktorgrube (2), die mit einem Schütz (36) zum automatischen Verschließen der Schleuse (10) bei einem Absinken des Wasserspiegels (h) im Brennelementlagerbecken (4) unter einen vorgegebenen Grenzwert (h_{G}) versehen ist.

2. Brennelementlagerbecken nach Anspruch 1, bei dem zum Antreiben des Schützes (36) beim automatischen Verschließen ein passives Antriebssystem (34) mit einem netzunabhängigen Energiespeicher (32) vorgesehen ist.

3. Brennelementlagerbecken nach Anspruch 1 oder Anspruch 2, bei dem der Signalgeber (30) für das Unterschreiten des Grenzwertes und zum Auslösen der Schließbewegung des Schützes (36) einen Schwimmer (38) umfasst.

## Claims

1. A fuel pool (4) of a nuclear power plant, comprising a sluice (10) to a reactor pit (2), said sluice being provided with a lock gate (36) for automatically closing the sluice (10) when the water level (h) in the fuel pool (4) falls below a predetermined limit value (hG).

2. The fuel pool according to claim 1, wherein a passive drive system (34) with a network-independent energy storage (32) is provided for driving the lock gate (36) during automatic closure.

3. The fuel pool according to claim 1 or claim 2, wherein the signal generator (30) for the undershooting of the limit value and for triggering the closing movement of the lock gate (36) comprises a float (38).

## Revendications

1. Piscine de stockage du combustible (4) d'une centrale nucléaire comportant un sas (10) vers une cuve du réacteur (2) pourvue d'un contacteur (36) pour la fermeture automatique du sas (10) en cas de baisse du niveau d'eau (h) dans la piscine de stockage du combustible (4) en dessous d'une valeur seuil (h_{G}) prédéfinie.

2. Piscine de stockage du combustible selon la revendication 1, dans laquelle un système d'entraînement passif (34) est doté d'un accumulateur d'énergie (32) indépendant du réseau pour l'entraînement du contacteur (36) lors de la fermeture automatique.

3. Piscine de stockage du combustible selon la revendication 1 ou la revendication 2, dans laquelle le transmetteur de signaux (30) comprend un flotteur (38) pour le dépassement vers le bas de la valeur seuil et pour déclencher le mouvement de fermeture du contacteur (36) .
